# FASCICULE DE BREVET EUROPEEN

(11) **EP 1 880 169 B1**
(45) Date de publication et mention de la délivrance du brevet: **06.07.2011**
(21) Numéro de dépôt: 06764587.9
(22) Date de dépôt: 03.05.2006
(51) Int. Cl.: G01C 23/00, G05D 1/06, B64D 45/04, G08G 5/02

(54) **PROCÉDÉ ET DISPOSITIF D'AIDE AU PILOTAGE D'UN AVION LORS D'UNE PHASE D'APPROCHE EN VUE D'UN ATTERRISSAGE**
VERFAHREN UND VORRICHTUNG ZUR UNTERSTÜTZUNG EINER FLUGZEUGKONTROLLE WÄHREND DES LANDEANFLUGS
METHOD AND DEVICE FOR ASSISTING AN AIRCRAFT FLIGHT CONTROL DURING LANDING APPROACH

(30) Priorité: 09.05.2005 FR 0504616
(43) Date de publication de la demande: 23.01.2008
(73) Titulaire: AIRBUS OPERATIONS (SAS), 31060 Toulouse (FR)
(72) Inventeur: LACAZE, Isabelle, F-31770 Colomiers (FR); FOUCART, Vincent, F-31300 Toulouse (FR); DE MENORVAL, Jean-Louis, Route de Seilh, 31840 Aussone (FR); ZADROZYNSKI, Didier, F-31200 Toulouse (FR); LEMOULT, Frédéric, F-31000 Toulouse (FR); BARTHE, Joëlle, F-31000 Toulouse (FR); LHOTE, Sébastien, F-31000 Toulouse (FR); HOSTE VENTOS, Irène, F-31170 Tornefeuille (FR)
(74) Mandataire: Hauer, Bernard
(86) Numéro de dépôt international: PCT/FR2006/000989
(87) Numéro de publication internationale: WO 2006/120318

(56) Documents cités:
- WO-A-01/20583
- US-A- 4 368 517
- US-A1- 2003 193 410
- US-A1- 2004 075 586
- US-A1- 2004 167 685

## Description

La présente invention concerne un procédé et un dispositif d'aide au pilotage d'un avion, en particulier d'un avion de transport, lors d'une phase d'approche en vue d'un atterrissage sur une piste d'atterrissage d'un aéroport.

On sait qu'une proportion importante d'accidents d'avions surviennent lors d'une phase d'approche en vue d'un atterrissage. Les principales causes d'accidents sont en général relatives à :
- des conditions météorologiques non anticipées ;
- des réactions inadaptées des pilotes ;
- une configuration aérodynamique non optimale de l'avion ; et
- une approche non stabilisée de l'avion (qui est trop haut et/ou arrive trop vite).

Dans la plupart des cas, si les équipages des avions avaient eu connaissance que la situation réelle de leur avion ne permettait pas de réaliser un atterrissage dans de bonnes conditions de sécurité, ils auraient pu éviter ces incidents en effectuant une remise des gaz ("go-around" en anglais).

On sait également qu'une remise des gaz est une manoeuvre généralement délicate qui est souvent réalisée trop tard, car non souhaitée. Une remise des gaz est en effet souvent encore considérée comme un échec pour les pilotes. Aussi, les pilotes vont chercher en général à l'éviter au maximum, si nécessaire en essayant de rattraper une situation difficile.

Toutefois, si une telle manoeuvre de remise des gaz était réalisée à bon escient à chaque fois que nécessaire, elle permettrait d'éviter de nombreux incidents et accidents survenus en phase d'approche (approche d'une piste et atterrissage sur cette piste). Le document WO 01/20583 décrit un dispositif d'aide au pilotage d'un avion en phase d'approche.

La présente invention concerne un procédé d'aide au pilotage d'un avion lors d'une phase d'approche en vue d'un atterrissage, et plus précisément un procédé d'aide à la gestion de l'énergie en approche, qui a pour objet d'aider le pilote dans sa prise de décision pour interrompre ou non la phase d'approche par une manoeuvre de remise des gaz, notamment en lui indiquant toutes les marges en énergie pour rejoindre une approche stabilisée.

A cet effet, selon l'invention, ledit procédé est remarquable en ce que l'on réalise, de façon automatique et répétitive, la suite d'étapes successives suivante :
a) on détermine des conditions de vol courantes de l'avion ;
b) on détermine, à l'aide desdites conditions de vol courantes et d'un modèle prédéterminé, une distance d'approche minimale qui correspond à une distance minimale entre des projections sur un plan horizontal de la position actuelle de l'avion et d'une position de contact avec le sol, lorsque l'avion descend et décélère conformément à une approche optimisée pour atteindre des conditions d'approche stabilisée ; et
c) on présente à un pilote de l'avion, sur un écran de navigation de type ND ("Navigation Display" en anglais), au moins cette distance d'approche minimale sous forme d'un premier arc de cercle qui est centré sur une position relative à l'avion et qui illustre la position de contact avec le sol (et fournit une information de distance). Ladite position relative à l'avion correspond à la position qu'a l'avion s'il se trouve sur une trajectoire prescrite en vue de l'atterrissage ou à défaut à la position actuelle dudit avion.

Ainsi, grâce à l'invention, le pilote connaît à tout instant la position de contact avec le sol de son avion (et donc sa marge vis-à-vis de la piste) s'il met en oeuvre une approche optimisée, pour laquelle la distance horizontale à partir de la position actuelle de l'avion jusqu'à la position de contact de l'avion sur la piste d'atterrissage est la plus petite possible, en fonction notamment des capacités de freinage aérodynamique de l'avion (prises en compte dans ledit modèle) et des conditions de vol courantes.

De façon avantageuse, à l'étape c), on présente de plus, sur ledit écran de navigation, un symbole qui illustre la position d'une piste d'atterrissage prévue pour l'atterrissage et qui indique au moins le seuil de cette piste d'atterrissage, ledit premier arc de cercle se trouvant sur la trajectoire latérale de l'avion, sur laquelle est sensé se trouver également ledit symbole illustrant la position de la piste d'atterrissage.

Ainsi, lorsque sur ledit écran de navigation ledit premier arc de cercle dépasse ledit seuil de la piste d'atterrissage illustré par ce symbole, le pilote sait qu'il lui sera impossible d'atteindre des conditions d'approche stabilisée en vue de réaliser l'atterrissage sur ladite piste d'atterrissage, à moins peut-être de changer son profil latéral.

Selon l'invention, lesdites conditions d'approche stabilisée supposent que l'avion présente une vitesse d'approche et une pente d'approche prédéterminées et stabilisées (c'est-à-dire constantes) à une hauteur prédéterminée par rapport au sol, par exemple 500 pieds (environ 150 mètres) ou 1000 pieds (environ 300 mètres), et ceci jusqu'à une hauteur, par exemple 50 pieds (environ 15 mètres), à proximité directe de la piste d'atterrissage.

Par conséquent, grâce audit premier arc de cercle et audit symbole présentés sur l'écran de navigation, on apporte une aide précieuse au pilote dans sa prise de décision d'interrompre éventuellement une phase d'approche, puisque grâce à ces informations il sait lorsque l'approche est non stabilisée et non récupérable. Dans une telle situation, il n'a alors plus à hésiter pour réaliser une manoeuvre de remise des gaz (ou une manoeuvre de perte d'énergie). Ceci pourra sans doute permettre d'éviter de nombreux incidents et accidents lors de la phase d'approche et de mieux gérer l'approche pour réduire le nombre de remises des gaz.

Pour bien faire prendre conscience au pilote de toute situation critique du type précité, avantageusement, on émet un signal d'alerte dans le poste de pilotage de l'avion, lorsque ledit premier arc de cercle est situé au-delà du seuil de la piste d'atterrissage (par rapport à la position actuelle de l'avion), c'est-à-dire lorsque la position du point de contact de l'avion (relatif à une approche optimisée telle qu'indiquée précédemment) est située au-delà dudit seuil de la piste d'atterrissage de sorte que l'atterrissage ne pourra pas être réalisé du tout, ou tout au moins pas dans de bonnes conditions de sécurité.

Dans un mode de réalisation particulier, on détermine (plus précisément, on estime ou on mesure de façon usuelle), à l'étape a), comme conditions de vol courantes de l'avion, au moins :
- la hauteur de l'avion par rapport au sol ;
- la vitesse de l'avion ; et
- la configuration aérodynamique dudit avion.

En outre, avantageusement, ledit modèle destiné à la détermination de la distance d'approche minimale en fonction des conditions de vol courantes comporte un réseau de neurones. Dans ce cas, de préférence, ledit réseau de neurones détermine ladite distance d'approche minimale, en fonction desdites conditions de vol courantes et desdites conditions d'approche stabilisée, ainsi qu'au moins des paramètres suivants :
- la pression atmosphérique au niveau du sol ;
- la masse de l'avion ; et
- le vent instantané longitudinal.

De plus, dans un mode de réalisation particulier, ledit réseau de neurones dépend du type dudit avion, en particulier de ses caractéristiques aérodynamiques et de ses performances. Ceci permet d'optimiser le modèle et de l'adapter à l'avion sur lequel la présente invention est mise en oeuvre.

Avantageusement, on détermine ledit réseau de neurones lors d'une étape préliminaire, antérieure au vol de l'avion.

En outre, de façon avantageuse, on détermine ladite distance d'approche minimale, en prenant en compte un profil de descente optimal en fonction desdites conditions de vol courantes.

Dans un mode de réalisation particulier, de plus :
- à l'étape b), on détermine une seconde distance d'approche qui correspond à une distance entre des projections sur un plan horizontal de la position actuelle de l'avion et d'une position de contact avec le sol, lorsque l'avion descend et décélère conformément à une approche standard (relativement à des prescriptions aéronautiques) pour atteindre les conditions d'approche stabilisée ; et
- à l'étape c), on présente au pilote de l'avion, sur ledit écran de navigation, cette seconde distance d'approche sous forme d'un second arc de cercle qui est centré sur ladite position relative à l'avion et qui illustre la position de contact avec le sol (relative à une approche standard).

La présente invention concerne également un dispositif d'aide au pilotage d'un avion, en particulier d'un avion de transport, lors d'une phase d'approche en vue d'un atterrissage sur une piste d'atterrissage d'un aéroport.

Selon l'invention, ledit dispositif est remarquable en ce qu'il comporte :
- des premiers moyens pour déterminer des conditions de vol courantes de l'avion ;
- des seconds moyens pour déterminer, à l'aide desdites conditions de vol courantes et d'un modèle prédéterminé, une distance d'approche minimale qui correspond à une distance minimale entre des projections sur un plan horizontal de la position actuelle de l'avion et d'une position de contact avec le sol, lorsque l'avion descend et décélère conformément à une approche optimisée pour atteindre des conditions d'approche stabilisée ; et
- des moyens d'affichage pour présenter, sur un écran de navigation, au moins cette distance d'approche minimale sous forme d'un premier arc de cercle qui est centré sur la position (précitée) relative à l'avion et qui illustre la position de contact avec le sol.

De préférence, lesdits seconds moyens comportent un réseau de neurones.

En outre, dans un mode de réalisation particulier, ledit dispositif conforme à l'invention comporte, de plus, des moyens d'alerte susceptibles d'émettre un signal d'alerte (sonore et/ou visuel) dans le poste de pilotage de l'avion, lorsque ledit premier arc de cercle est situé au-delà du seuil d'une piste d'atterrissage prévue pour l'atterrissage.
Les figures du dessin annexé feront bien comprendre comment l'invention peut être réalisée. Sur ces figures, des références identiques désignent des éléments semblables.
La figure 1 est le schéma synoptique d'un dispositif d'aide au pilotage conforme à l'invention.

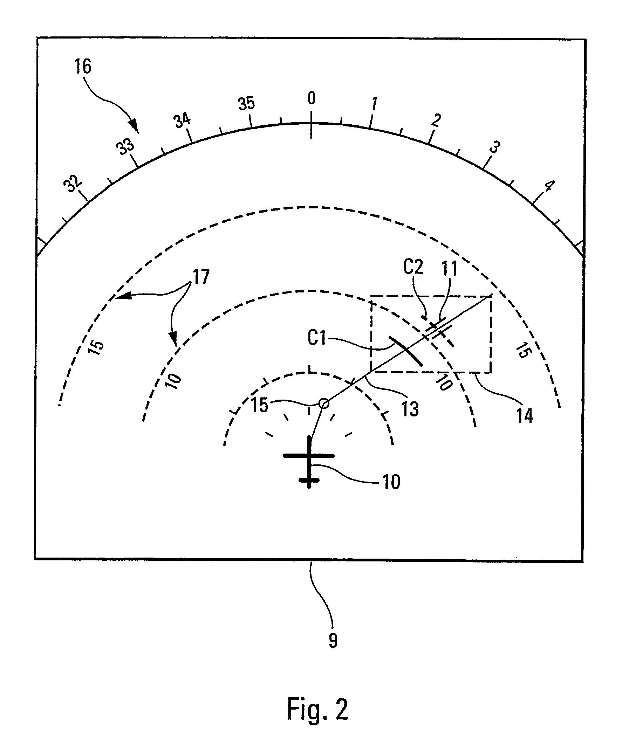

La figure 2 montre un écran de navigation comportant les informations présentées conformément à la présente invention.
Les figures 3 à 5 représentent une partie de l'écran de navigation de la figure 2, respectivement pour des phases d'approche différentes.
La figure 6 est un graphique illustrant différentes trajectoires d'approche susceptibles d'être suivies par un avion, conformément à la présente invention, en vue d'un atterrissage sur une piste d'atterrissage.

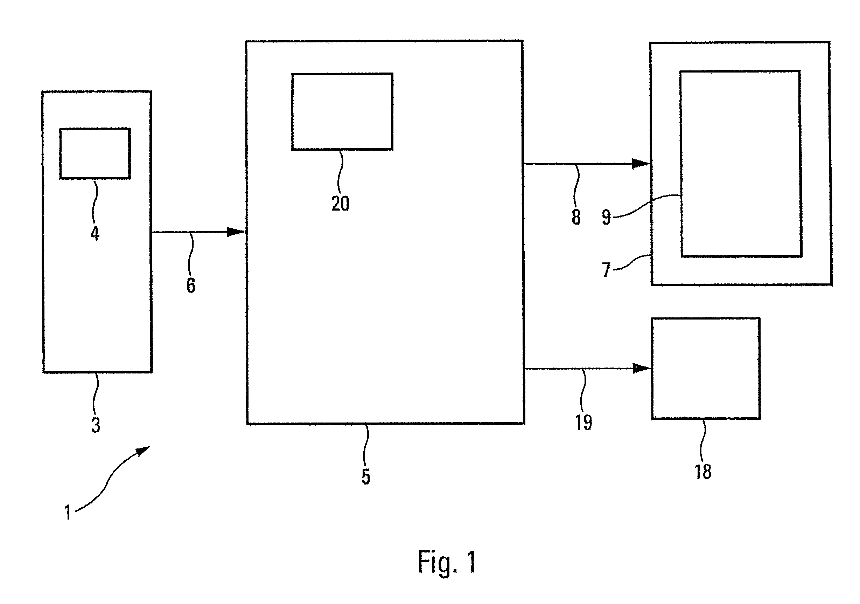

Le dispositif 1 conforme à l'invention et représenté schématiquement sur la figure 1 est destiné à aider un pilote pour piloter un avion A, notamment un avion de transport gros porteur, lors de l'approche d'une piste d'atterrissage 2 en vue d'un atterrissage sur cette piste 2.

Selon l'invention, ledit dispositif 1 comporte :
- un ensemble 3 de sources d'information qui comprennent au moins des moyens 4 pour déterminer, en particulier pour mesurer ou estimer, de façon usuelle, des conditions de vol courantes de l'avion A. Plus précisément, lesdits moyens 4 déterminent au moins les conditions de vol courantes suivantes :
   ■ la hauteur de l'avion A par rapport au sol ;
   ■ la vitesse de l'avion A ; et
   ■ la configuration aérodynamique (positions des becs et des volets notamment) dudit avion A ;
- une unité centrale 5 qui est reliée par une liaison 6 audit ensemble 3 de sources d'information, et qui détermine, à l'aide des conditions de vol courantes reçues desdits moyens 4 et d'un modèle prédéterminé précisé ci-dessous, une distance d'approche minimale Dmin qui correspond à une distance minimale (profil réalisable par le pilote) entre des première et seconde projections sur un plan horizontal, d'une part de la position actuelle de l'avion A et, d'autre part d'une position de contact avec le sol dudit avion A, lorsque ce dernier descend et décélère à partir de sa position actuelle, conformément à une approche optimisée précisée ci-dessous, pour atteindre des conditions d'approche stabilisée, également précisées ci-après ; et
- des moyens d'affichage 7 qui sont reliés par une liaison 8 à ladite unité centrale 5 et qui sont destinés à présenter, sur un écran de navigation 9 usuel de type ND ("Navigation Display" en anglais), au moins cette distance d'approche minimale Dmin, et ceci sous forme d'un arc de cercle C1 qui est centré sur une position relative à l'avion A. Ladite position relative à l'avion A correspond à la position qu'a l'avion A s'il se trouve sur une trajectoire prescrite en vue de l'atterrissage ou à défaut à la position actuelle dudit avion A, illustrée de façon usuelle par un symbole 10. L'arc de cercle C1 est éloigné dudit symbole 10 d'une distance représentative de cette distance Dmin. Cet arc de cercle C1 montre la position de contact de l'avion A avec le sol s'il réalise une approche optimisée permettant d'obtenir la distance Dmin la plus petite possible. II fournit également au pilote une information de distance (avion - position de contact).

Ainsi, grâce audit dispositif 1, le pilote connaît à tout instant la position de contact avec le sol de son avion A s'il met en oeuvre une approche optimisée, pour laquelle la distance horizontale à partir de la position actuelle de l'avion A jusqu'à la position de contact de l'avion A sur la piste d'atterrissage 2, est la plus petite possible, en fonction notamment des capacités de freinage aérodynamique de l'avion A (prises en compte dans ledit modèle) et des conditions de vol courantes (reçues desdits moyens 4).

Selon l'invention, lesdits moyens d'affichage 7 présentent de plus, sur ledit écran de navigation 9, un symbole 11 qui illustre la position de la piste d'atterrissage 2 prévue pour l'atterrissage de l'avion A et qui signale au moins la position du seuil amont 12 de ladite piste d'atterrissage 2. Selon l'invention, ledit arc de cercle C1 se trouve par définition sur la trajectoire latérale 13 qui est suivie par l'avion A et qui passe par ledit symbole 11 sur l'écran de navigation 9, afin de diriger l'avion A vers la piste d'atterrissage 2.

Par conséquent, lorsque sur ledit écran de navigation 9, ledit arc de cercle C1 dépasse le seuil 12 de la piste d'atterrissage (symbole 11), le pilote sait qu'il lui sera impossible d'atteindre les conditions d'approche stabilisée en vue de réaliser l'atterrissage sur la piste d'atterrissage 2, à moins peut-être de changer son profil latéral.

Ainsi, grâce audit arc de cercle C1 et audit symbole 11 présentés sur l'écran de navigation 9, le dispositif 1 conforme à l'invention apporte une aide précieuse au pilote dans sa prise de décision d'interrompre éventuellement une phase d'approche, puisque grâce à ces informations il sait lorsque l'approche est non stabilisée et non récupérable. Dans une telle situation, il n'a alors plus à hésiter pour réaliser une manoeuvre de remise des gaz. Ceci pourra sans doute permettre d'éviter de nombreux incidents et accidents lors de la phase d'approche.

Par définition, une remise des gaz ("go-around" en anglais) est une phase de vol pendant laquelle les opérations d'atterrissage en cours ne sont pas menées à terme.

Dans un mode de réalisation particulier :
- ladite unité centrale 5 détermine une distance d'approche DO qui correspond à une distance entre des première et troisième projections sur un plan horizontal, d'une part de la position actuelle de l'avion A et, d'autre part d'une position de contact avec le sol, lorsque l'avion A descend et décélère à partir de sa position actuelle, conformément à une approche standard (c'est-à-dire conformément à une approche qui est réalisée de façon réglementaire et usuelle) pour atteindre lesdites conditions d'approche stabilisée ; et
- lesdits moyens d'affichage 7 présentent, sur ledit écran de navigation 9, cette distance d'approche DO sous forme d'un arc de cercle C2 qui est également centré sur la position précitée relative à l'avion A (symbole 10) et qui illustre la position de contact avec le sol pour une telle approche standard.

Selon l'invention, lesdites conditions d'approche stabilisée supposent que l'avion A présente une vitesse d'approche et une pente d'approche prédéterminées et stabilisées (c'est-à-dire constantes) à une hauteur prédéterminée par rapport au sol, par exemple 500 pieds (environ 1 50 mètres) ou 1000 pieds (environ 300 mètres), et ceci jusqu'à une hauteur, par exemple 50 pieds (environ 15 mètres), à proximité directe de la piste d'atterrissage 2.

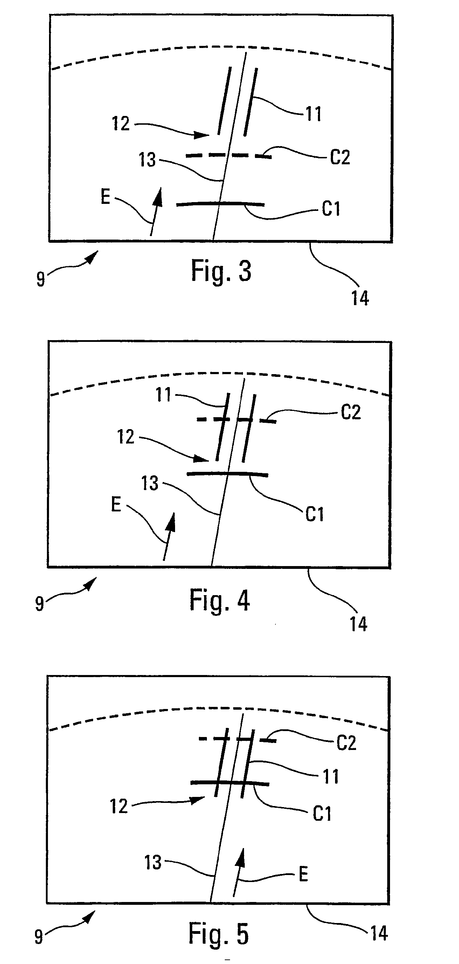

A titre d'illustration, on fait référence ci-après à trois situations différentes représentées respectivement sur les figures 3 à 5 qui montrent une partie 14 de l'écran de navigation 9 comprenant notamment les arcs de cerclé C1 et C2 et le symbole 11 :
- sur l'exemple de la figure 3, les arcs de cercle C1 et C2 se trouvent en amont du seuil 12 de la piste d'atterrissage (symbole 11) dans le sens E de vol de l'avion A de sorte que l'avion A peut dans cet exemple réaliser une approche, aussi bien conformément à une approche optimisée que conformément à une approche standard ;
- sur l'exemple de la figure 4, l'arc de cercle C1 (approche optimisée) se trouve en amont du seuil 12 de la piste d'atterrissage 2, alors que l'arc de cercle C2 (approche standard) se trouve au-delà (en aval) dudit seuil 12 de la piste d'atterrissage 2. Dans cet exemple, l'avion A ne peut pas réaliser une approche standard. En revanche, une approche optimisée est toujours possible ; et
- sur l'exemple de la figure 5, les deux arcs de cercle C1 et C2 sont situés au-delà (en aval) du seuil 12 de la piste d'atterrissage 2 de sorte que ni une approche standard, ni une approche optimisée ne sont possibles. Dans cet exemple, le pilote doit donc mettre en oeuvre une manoeuvre de remise des gaz.

Les moyens d'affichage 7 présentent, de plus, de façon usuelle, sur l'écran de navigation 9, notamment :
- un tracé 13 montrant la trajectoire de vol théorique de l'avion A dans le plan horizontal avec des points de route 15 ;
- une graduation usuelle 16 en écarts angulaires ; et
- une graduation usuelle 17 en distance, définie par rapport à la position actuelle de l'avion A illustrée par le symbole 10.

Le dispositif 1 conforme à l'invention comporte, de plus, des moyens d'alerte 18 qui sont reliés par une liaison 19 à ladite unité centrale 5 et qui sont susceptibles d'émettre un signal d'alerte dans le poste de pilotage de l'avion A, lorsque ledit arc de cercle C1 est situé au-delà du seuil 12 de la piste d'atterrissage 2 (par rapport à la position actuelle de l'avion A), c'est-à-dire lorsque la position du point de contact de l'avion A (relatif à une approche optimisée telle qu'indiquée précédemment) est située au-delà dudit seuil 12 de la piste d'atterrissage 2 de sorte que l'atterrissage ne pourra pas être réalisé du tout, ou tout au moins pas dans de bonnes conditions de sécurité. Ledit signal d'alerte peut être un signal sonore et/ou un signal visuel, notamment un message d'alerte et/ou un changement de couleur ou de forme concernant des informations affichées sur l'écran de navigation 9, telles que l'arc de cercle C1 et/ou le symbole 11 par exemple.

Par conséquent, grâce au dispositif 1 conforme à l'invention, le pilote dispose d'indications lui permettant de gérer l'énergie de l'avion A et, le cas échéant, d'effectuer des corrections sur l'état d'énergie ou si nécessaire une remise de gaz. Ledit dispositif 1 permet ainsi de réduire le nombre d'incidents lors des phases d'approche. Les incidents qui sont couverts par ledit dispositif 1 sont notamment les sorties de piste, les atterrissages durs, résultats d'approches non stabilisées causées par un surplus d'énergie (trop haut, trop vite). En outre, grâce à l'invention, on peut réaliser en particulier :
- une surveillance de l'énergie en phase d'approche entre 10 000 pieds (environ 3000 mètres) et 500 pieds (environ 150 mètres), 500 pieds étant l'altitude ultime pour être stabilisé par procédure ; et
- une aide à la décision de réaliser une remise des gaz entre 500 pieds et 50 pieds (environ 15 mètres), où l'avion A doit être stabilisé sur une pente d'approche prédéterminée (généralement 3°) formant un axe d'approche PA, et ceci à une vitesse d'approche usuelle prédéterminée.

Par ailleurs, ledit modèle est utilisé par un module de calcul 20 de l'unité centrale 5 pour déterminer la distance d'approche minimale Dmin. Pour ce faire, ce module de calcul 20 comporte un réseau de neurones. De préférence, ce réseau de neurones permet de déterminer ladite distance d'approche minimale Dmin, en fonction desdites conditions de vol courantes et desdites conditions d'approche stabilisée, ainsi que des paramètres suivants :
- la pression atmosphérique au niveau du sol ;
- la masse de l'avion A ; et
- le vent instantané longitudinal.

De plus, dans un mode de réalisation particulier, ledit réseau de neurones dépend du type dudit avion A, en particulier de ses caractéristiques et performances aérodynamiques. Ceci permet d'optimiser le modèle et de l'adapter à l'avion A sur lequel le dispositif 1 est installé.

Selon l'invention, ledit réseau de neurones est déterminé au sol lors d'une étape préliminaire, antérieure au vol de l'avion A.

En outre, ledit module de calcul 20 détermine ladite distance d'approche minimale Dmin, en prenant en compte un profil de descente optimal en fonction desdites conditions de vol courantes de l'avion A.

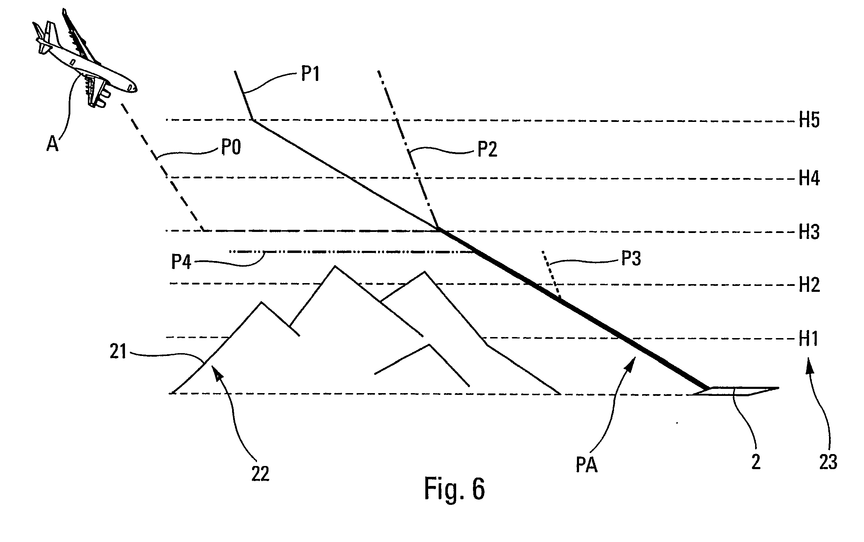

Sur la figure 6, on a représenté différents profils (de descente) de référence PO à P4, permettant de réaliser un atterrissage sur la piste 2 en survolant le relief 21 du terrain 22 environnant, ainsi qu'une échelle de hauteur 23 dont les valeurs H1 à H5 signalées sont par exemple séparées à chaque fois de 50 pieds (environ 15 mètres). Lesdits profils de référence PO à P4 sont des profils optimaux de perte d'énergie qui couvrent toutes les conditions initiales d'altitude et de vitesse de l'avion A. Ainsi, suivant lesdites conditions initiales d'altitude et de vitesse, l'unité centrale 5 choisit le profil de perte d'énergie PO, P1, P2, P3, P4 qui est optimal (qui permet notamment d'obtenir la distance Dmin la plus petite), et le module de calcul 20 utilise ce dernier pour calculer ladite distance Dmin conformément audit modèle intégré.

En se référant à la figure 6, sur laquelle on a représenté l'avion A qui suit un profil de descente standard PO, on peut considérer que :
- lorsque l'avion A se trouve dans une configuration lisse, on cherche à réaliser une descente à une vitesse maximale usuelle VLO (connue sous l'expression "Maximum Landing Gear Operating Speed" en anglais) en configuration lisse, avec le train d'atterrissage et les volets sortis, avant de décélérer sur un axe d'approche vertical (profil P1). Cet axe d'approche vertical est un axe PA (dit "glide" en anglais) qui est émis dans le cadre d'une d'approche et d'un atterrissage usuels aux instruments de type ILS ("Instrument Landing System" en anglais) ;
- lorsque l'avion A se trouve dans une configuration hypersustentée, on cherche à réaliser une descente à une vitesse maximale usuelle avec volets sortis VFE ("Maximum Speed with Flaps Extended" en anglais) dans une configuration dite "FULL", avec le train d'atterrissage et les volets sortis, avant de décélérer sur l'axe d'approche vertical PA (profil P2) ;
- lorsque l'avion A se trouve sous l'altitude de la procédure standard PO (qui est définie par le relief 21 du terrain 22 d'approche) et sous l'axe d'approche vertical PA, l'avion A effectue des décélérations en paliers, avec le train d'atterrissage et les volets sortis, avant de continuer la décélération sur ledit axe d'approche vertical PA (profil P4 qui est un profil qui est non optimal, mais qui privilégie la sécurité par rapport au relief) ; et
- lorsque l'avion A se trouve sous l'altitude de procédure standard, mais au-dessus de l'axe d'approche vertical PA, on procède à une descente en configuration hypersustentée à la vitesse initiale (si cette vitesse initiale est inférieure à la vitesse VFE de la configuration "FULL"), avec le train d'atterrissage et les volets sortis, avant de décélérer sur ledit axe d'approche vertical PA (profil P3).

## Revendications

1. Procédé d'aide au pilotage d'un avion (A) lors d'une phase d'approche en vue d'un atterrissage, procédé selon lequel on réalise, de façon automatique et répétitive, la suite d'étapes successives suivante :
a) on détermine des conditions de vol courantes de l'avion (A) ;
b) on détermine, au moins à l'aide desdites conditions de vol courantes, une distance d'approche minimale entre la position actuelle de l'avion (A) et une position de contact avec le sol ; et
c) on présente à un pilote de l'avion (A), sur un écran de navigation (9), au moins cette distance d'approche minimale,
**caractérisé en ce que** :
- à l'étape b), on détermine ladite distance minimale à l'aide desdites conditions de vol, ainsi que d'un modèle prédéterminé qui tient compte de capacités de freinage aérodynamique de l'avion (A) ;
- à l'étape b), on détermine ladite distance minimale comme la distance minimale entre des projections sur un plan horizontal de la position actuelle de l'avion (A) et d'une position de contact avec le sol, lorsque l'avion (A) descend et décélère conformément à une approche optimisée pour atteindre des conditions d'approche stabilisée, ladite approche optimisée étant telle qu'elle permet d'obtenir la distance minimale la plus petite possible ;
- à l'étape b), on détermine, de plus, une seconde distance d'approche qui correspond à une distance entre des projections sur un plan horizontal de la position actuelle de l'avion (A) et d'une position de contact avec le sol, lorsque l'avion (A) descend et décélère conformément à une approche standard pour atteindre les conditions d'approche stabilisée ; et
- à l'étape c), on présente au pilote de l'avion (A), sur ledit écran de navigation (9), à la fois :
■ cette distance d'approche minimale, sous forme d'un premier arc de cercle (C1) qui est centré sur une position (10) relative à l'avion et qui illustre la position de contact avec le sol relative à une approche optimisée ; et
■ cette seconde distance d'approche, sous forme d'un second arc de cercle (C2) qui est centré sur ladite position (10) relative à l'avion et qui illustre la position de contact avec le sol relative à une approche standard.

2. Procédé selon la revendication 1,
**caractérisé en ce qu'**à l'étape c), on présente de plus, sur ledit écran de navigation (9), un symbole (11) qui illustre la position d'une piste d'atterrissage (2) prévue pour l'atterrissage et qui indique au moins le seuil (12) de cette piste d'atterrissage (2), et **en ce que** ledit premier arc de cercle (C1) se trouve sur la trajectoire latérale (13) de l'avion (A).

3. Procédé selon l'une des revendications 1 et 2,
**caractérisé en ce que** l'on émet un signal d'alerte dans le poste de pilotage de l'avion (A), lorsque ledit premier arc de cercle (C1) est situé au-delà du seuil (12) de la piste d'atterrissage (2).

4. Procédé selon l'une quelconque des revendications précédentes,
**caractérisé en ce qu'**à l'étape a), on détermine, comme conditions de vol courantes de l'avion (A), au moins :
- la hauteur de l'avion (A) par rapport au sol ;
- la vitesse de l'avion (A) ; et
- la configuration aérodynamique dudit avion (A).

5. Procédé selon l'une quelconque des revendications précédentes,
**caractérisé en ce que** lesdites conditions d'approche stabilisée supposent que l'avion (A) présente une vitesse d'approche et une pente d'approche prédéterminées et stabilisées à une hauteur prédéterminée par rapport au sol.

6. Procédé selon l'une quelconque des revendications précédentes,
**caractérisé en ce que** ledit modèle destiné à la détermination de la distance d'approche minimale en fonction des conditions de vol courantes, comporte un réseau de neurones.

7. Procédé selon la revendication 6,
**caractérisé en ce que** ledit réseau de neurones détermine ladite distance d'approche minimale, en fonction desdites conditions de vol courantes et desdites conditions d'approche stabilisée, ainsi qu'au moins des paramètres suivants :
- la pression atmosphérique au niveau du sol ;
- la masse de l'avion (A) ; et
- le vent instantané longitudinal.

8. Procédé selon l'une des revendications 6 et 7,
**caractérisé en ce que** ledit réseau de neurones dépend du type dudit avion (A).

9. Procédé selon l'une quelconque des revendications 6 à 8,
**caractérisé en ce que** l'on détermine ledit réseau de neurones lors d'une étape préliminaire, antérieure au vol de l'avion (A).

10. Procédé selon l'une quelconque des revendications précédentes,
**caractérisé en ce que** l'on détermine ladite distance d'approche minimale, en prenant en compte un profil de descente optimal (PO à P4) en fonction desdites conditions de vol courantes.

11. Dispositif d'aide au pilotage d'un avion lors d'une phase d'approche en vue d'un atterrissage, ledit dispositif comportant :
- des premiers moyens (4) pour déterminer des conditions de vol courantes de l'avion (A) ;
- des seconds moyens (5) pour déterminer, au moins à l'aide desdites conditions de vol courantes, une distance d'approche minimale entre la position actuelle de l'avion (A) et une position de contact avec le sol ; et
- des moyens d'affichage (7) pour présenter, sur un écran de navigation (9), au moins cette distance d'approche minimale,
**caractérisé en ce que** :
- lesdits seconds moyens 5 comportent :
■ des moyens pour déterminer ladite distance minimale à l'aide desdites conditions de vol et d'un modèle prédéterminé qui tient compte de capacités de freinage aérodynamique de l'avion (A), ladite distance minimale correspondant à la distance minimale entre des projections sur un plan horizontal de la position actuelle de l'avion (A) et d'une position de contact avec le sol, lorsque l'avion (A) descend et décélère conformément à une approche optimisée pour atteindre des conditions d'approche stabilisée, ladite approche optimisée étant telle qu'elle permet d'obtenir la distance minimale la plus petite possible ; et
■ des moyens pour déterminer une seconde distance d'approche qui correspond à une distance entre des projections sur un plan horizontal de la position actuelle de l'avion (A) et d'une position de contact avec le sol, lorsque l'avion (A) descend et décélère conformément à une approche standard pour atteindre les conditions d'approche stabilisée ; et
- lesdits moyens d'affichage (7) sont formés pour présenter au pilote de l'avion (A), sur ledit écran de navigation (9), à la fois :
■ cette distance d'approche minimale, sous forme d'un premier arc de cercle (C1) qui est centré sur une position (10) relative à l'avion et qui illustre la position de contact avec le sol relative à une approche optimisée ; et
■ cette seconde distance d'approche, sous forme d'un second arc de cercle (C2) qui est centré sur ladite position (10) relative à l'avion et qui illustre la position de contact avec le sol relative à une approche standard.

12. Dispositif selon la revendication 11,
**caractérisé en ce que** lesdits seconds moyens (5) comportent un réseau de neurones.

13. Dispositif selon l'une des revendications 11 et 12,
**caractérisé en ce qu'**il comporte, de plus, des moyens d'alerte (18) susceptibles d'émettre un signal d'alerte dans le poste de pilotage de l'avion (A), lorsque ledit premier arc de cercle (C1) est situé au-delà du seuil (12) d'une piste d'atterrissage (2) prévue pour l'atterrissage.

14. Avion,
**caractérisé en ce qu'**il comporte un dispositif (1) susceptible de mettre en oeuvre le procédé spécifié sous l'une quelconque des revendications 1 à 10.

15. Avion,
**caractérisé en ce qu'**il comporte un dispositif (1) tel que celui spécifié sous l'une quelconque des revendications 11 à 13.

## Claims

1. A method of aiding the piloting of an aircraft (A) during an approach phase for the purpose of landing, according to which method the following series of successive steps is carried out in an automatic and repetitive manner:
a) current flight conditions of the aircraft (A) are determined;
b) a minimum approach distance between the current position of the aircraft (A) and a position of contact with the ground is determined at least with the aid of said current flight conditions; and
c) at least this minimum approach distance is presented to a pilot of the aircraft (A) on a navigation screen (9),
**characterized in that**:
- in step b), said minimum distance is determined with the aid of said flight conditions, as well as of a predetermined model which takes account of aerodynamic braking capabilities of the aircraft (A);
- in step b), said minimum distance is determined as the minimum distance between projections onto a horizontal plane of the current position of the aircraft (A) and of a position of contact with the ground, when the aircraft (A) descends and decelerates in accordance with an optimized approach so as to achieve stabilized approach conditions, said optimized approach being such that it makes it possible to obtain the smallest possible minimum distance;
- in step b), a second approach distance is determined, moreover, which corresponds to a distance between projections onto a horizontal plane of the current position of the aircraft (A) and of a position of contact with the ground, when the aircraft (A) descends and decelerates in accordance with a standard approach so as to achieve the stabilized approach conditions; and
- in step c), at one and the same time the followimng are presented to the pilot of the aircraft (A), on said navigation screen (9):
● this minimum approach distance, in the form of a first circular arc (C1) which is centered on a position (10) relating to the aircraft and which illustrates the position of contact with the ground relating to an optimized approach; and
● this second approach distance, in the form of a second circular arc (C2) which is centered on said position (10) relating to the aircraft and which illustrates the position of contact with the ground relating to a standard approach.

2. The method as claimed in claim 1,
**characterized in that** in step c), a symbol (11) which illustrates the position of a landing runway (2) scheduled for the landing and which indicates at least the threshold (12) of this landing runway (2) is presented moreover, on said navigation screen (9), and **in that** said first circular arc (C1) is situated on the lateral trajectory (13) of the aircraft (A).

3. The method as claimed in one of claims 1 and 2,
**characterized in that** an alert signal is emitted in the flight deck of the aircraft (A), when said first circular arc (C1) is situated beyond the threshold (12) of the landing runway (2).

4. The method as claimed in any one of the preceding claims,
**characterized in that** in step a), at least the following are determined as current flight conditions of the aircraft (A):
- the height of the aircraft (A) with respect to the ground;
- the speed of the aircraft (A); and
- the aerodynamic configuration of said aircraft (A).

5. The method as claimed in any one of the preceding claims,
**characterized in that** said stabilized approach conditions assume that the aircraft (A) exhibits a predetermined approach speed and approach slope that are stabilized at a predetermined height relative to the ground.

6. The method as claimed in any one of the preceding claims,
**characterized in that** said model intended for determining the minimum approach distance as a function of the current flight conditions, comprises a neural net.

7. The method as claimed in claim 6,
**characterized in that** said neural net determines said minimum approach distance, as a function of said current flight conditions and of said stabilized approach conditions, as well as at least of the following parameters:
- the atmospheric pressure at ground level;
- the mass of the aircraft (A); and
- the longitudinal instantaneous wind.

8. The method as claimed in one of claims 6 and 7,
**characterized in that** said neural net depends on the type of said aircraft (A).

9. The method as claimed in any one of claims 6 to 8,
**characterized in that** said neural net is determined during a preliminary step, prior to the flight of the aircraft (A).

10. The method as claimed in any one of the preceding claims,
**characterized in that** said minimum approach distance is determined by taking into account an optimal descent profile (P0 to P4) as a function of said current flight conditions.

11. A device for aiding the piloting of an aircraft during an approach phase for the purpose of landing, said device comprising:
- first means (4) for determining current flight conditions of the aircraft (A);
- second means (5) for determining, at least with the aid of said current flight conditions, a minimum approach distance between the current position of the aircraft (A) and a position of contact with the ground; and
- display means (7) for presenting, on a navigation screen (9), at least this minimum approach distance,
**characterized in that**:
- said second means 5 comprise:
● means for determining said minimum distance with the aid of said flight conditions and of a predetermined model which takes account of aerodynamic braking capabilities of the aircraft (A), said minimum distance corresponding to the minimum distance between projections onto a horizontal plane of the current position of the aircraft (A) and of a position of contact with the ground, when the aircraft (A) descends and decelerates in accordance with an optimized approach so as to achieve stabilized approach conditions, said optimized approach being such that it makes it possible to obtain the smallest possible minimum distance; and
● means for determining a second approach distance which corresponds to a distance between projections onto a horizontal plane of the current position of the aircraft (A) and of a position of contact with the ground, when the aircraft (A) descends and decelerates in accordance with a standard approach so as to achieve the stabilized approach conditions; and
- said display means (7) are formed so as to present at one and the same time the following to the pilot of the aircraft (A), on said navigation screen (9):
● this minimum approach distance, in the form of a first circular arc (C1) which is centered on a position (10) relating to the aircraft and which illustrates the position of contact with the ground relating to an optimized approach; and
● this second approach distance, in the form of a second circular arc (C2) which is centered on said position (10) relating to the aircraft and which illustrates the position of contact with the ground relating to a standard approach.

12. The device as claimed in claim 11, **characterized in that** said second means (5) comprise a neural net.

13. The device as claimed in one of claims 11 and 12,
**characterized in that** it comprises, moreover, alert means (18) capable of emitting an alert signal in the flight deck of the aircraft (A), when said first circular arc (C1) is situated beyond the threshold (12) of a landing runway (2) scheduled for the landing.

14. An aircraft,
**characterized in that** it comprises a device (1) capable of implementing the method specified under any one of claims 1 to 10.

15. An aircraft,
**characterized in that** it comprises a device (1) such as that specified under any one of claims 11 to 13.

## Patentansprüche

1. Verfahren zur Unterstützung der Steuerung eines Flugzeugs (A) in einer Landeanflugphase, ein Verfahren, gemäß dem automatisch und wiederholt die folgende Abfolge von aufeinanderfolgenden Schritten durchgeführt wird:
a) es werden laufende Flugbedingungen des Flugzeugs (A) bestimmt;
b) es wird, zumindest mit Hilfe der laufenden Flugbedingungen, eine minimale Anflugentfernung zwischen der aktuellen Position des Flugzeugs (A) und einer Bodenkontaktposition bestimmt; und
c) einem Piloten des Flugzeugs (A) wird auf einem Navigationsbildschirm (9) mindestens diese minimale Anflugentfernung angezeigt,
**dadurch gekennzeichnet, dass**:
- im Schritt b) die minimale Entfernung mit Hilfe der Flugbedingungen sowie eines vorbestimmten Modells bestimmt wird, das aerodynamische Bremsleistungen des Flugzeugs (A) berücksichtigt;
- im Schritt b) die minimale Entfernung als die minimale Entfernung zwischen Projektionen der aktuellen Position des Flugzeugs (A) auf eine waagrechte Ebene und einer Bodenkontaktposition bestimmt wird, wenn das Flugzeug (A) gemäß einem optimierten Anflug sinkt und die Geschwindigkeit verringert, um Bedingungen eines stabilisierten Anflugs zu erreichen, wobei der optimierte Anflug so ist, dass er es ermöglicht, die kleinstmögliche minimale Entfernung zu erhalten;
- im Schritt b) außerdem eine zweite Anflugentfernung bestimmt wird, die einer Entfernung zwischen Projektionen der aktuellen Position des Flugzeugs (A) auf eine waagrechte Ebene und einer Bodenkontaktposition entspricht, wenn das Flugzeug (A) gemäß einem Standardanflug sinkt und die Geschwindigkeit verringert, um die Bedingungen eines stabilisierten Anflugs zu erreichen; und
- im Schritt c) dem Piloten des Flugzeugs (A) auf dem Navigationsbildschirm (9) gleichzeitig angezeigt wird:
• diese minimale Anflugentfernung in Form eines ersten Kreisbogens (C1), der auf eine Position (10) bezüglich des Flugzeugs zentriert ist und der die Bodenkontaktposition bezüglich eines optimierten Anflugs veranschaulicht; und
• diese zweite Anflugentfernung in Form eines zweiten Kreisbogens (C2), der auf die Position (10) bezüglich des Flugzeugs zentriert ist und der die Bodenkontaktposition bezüglich eines Standardanflugs veranschaulicht.

2. Verfahren nach Anspruch 1, **dadurch gekennzeichnet, dass** im Schritt c) außerdem auf dem Navigationsbildschirm (9) ein Symbol (11) gezeigt wird, das die Position einer Landebahn (2) veranschaulicht, die für die Landung vorgesehen ist, und das mindestens die Schwelle (12) dieser Landebahn (2) anzeigt, und dass der erste Kreisbogen (C1) sich auf der seitlichen Flugbahn (13) des Flugzeugs (A) befindet.

3. Verfahren nach einem der Ansprüche 1 und 2, **dadurch gekennzeichnet, dass** ein Warnsignal im Cockpit des Flugzeugs (A) ausgegeben wird, wenn der erste Kreisbogen (C1) sich jenseits der Schwelle (12) der Landebahn (2) befindet.

4. Verfahren nach einem der vorhergehenden Ansprüche, **dadurch gekennzeichnet, dass** im Schritt a) als laufende Flugbedingungen des Flugzeugs (A) mindestens bestimmt werden:
- die Höhe des Flugzeugs (A) bezüglich des Bodens;
- die Geschwindigkeit des Flugzeugs (A); und
- die aerodynamische Konfiguration des Flugzeugs (A).

5. Verfahren nach einem der vorhergehenden Ansprüche, **dadurch gekennzeichnet, dass** die Bedingungen eines stabilisierten Anflugs voraussetzen, dass das Flugzeug (A) eine vorbestimmte und stabilisierte Anfluggeschwindigkeit und Anflugneigung auf einer vorbestimmten Höhe bezüglich des Bodens hat.

6. Verfahren nach einem der vorhergehenden Ansprüche, **dadurch gekennzeichnet, dass** das zur Bestimmung der minimalen Anflugentfernung abhängig von den laufenden Flugbedingungen bestimmte Modell ein neuronales Netz aufweist.

7. Verfahren nach Anspruch 6, **dadurch gekennzeichnet, dass** das neuronale Netz die minimale Anflugentfernung abhängig von den laufenden Flugbedingungen und den Bedingungen eines stabilisierten Anflugs sowie mindestens von den folgenden Parametern bestimmt:
- dem atmosphärischen Druck in Bodenhöhe;
- der Masse des Flugzeugs (A); und
- dem augenblicklichen Längswind.

8. Verfahren nach einem der Ansprüche 6 und 7, **dadurch gekennzeichnet, dass** das neuronale Netz vom Typ des Flugzeugs (A) abhängt.

9. Verfahren nach einem der Ansprüche 6 bis 8, **dadurch gekennzeichnet, dass** das neuronale Netz während eines vor dem Flug des Flugzeugs (A) liegenden, vorbereitenden Schritts bestimmt wird.

10. Verfahren nach einem der vorhergehenden Ansprüche, **dadurch gekennzeichnet, dass** die minimale Anflugentfernung bestimmt wird, indem ein optimales Sinkprofil (P0 bis P4) abhängig von den laufenden Flugbedingungen berücksichtigt wird.

11. Vorrichtung zur Unterstützung der Steuerung eines Flugzeugs in einer Landeanflugphase, wobei die Vorrichtung aufweist:
- erste Einrichtungen (4), um laufende Flugbedingungen des Flugzeugs (A) zu bestimmen;
- zweite Einrichtungen (5), um mindestens mit Hilfe der laufenden Flugbedingungen eine minimale Anflugentfernung zwischen der aktuellen Position des Flugzeugs (A) und einer Bodenkontaktposition zu bestimmen; und
- Anzeigeeinrichtungen (7) um auf einem Navigationsbildschirm (9) mindestens diese minimale Anflugentfernung anzuzeigen,
**dadurch gekennzeichnet, dass**:
- die zweiten Einrichtungen (5) aufweisen:
● Einrichtungen, um die minimale Entfernung mit Hilfe der Flugbedingungen und eines vorbestimmten Modells zu bestimmen, das aerodynamische Bremsleistungen des Flugzeugs (A) berücksichtigt, wobei die minimale Entfernung der minimalen Entfernung zwischen Projektionen der aktuellen Position des Flugzeugs (A) auf eine waagrechte Ebene und einer Bodenkontaktposition entspricht, wenn das Flugzeug (A) gemäß einem optimierten Anflug sinkt und die Geschwindigkeit verringert, um Bedingungen eines stabilisierten Anflugs zu erreichen, wobei der optimierte Anflug so ist, dass er es ermöglicht, die kleinstmögliche minimale Entfernung zu erhalten; und
● Einrichtungen, um eine zweite Anflugentfernung zu bestimmen, die einer Entfernung zwischen Projektionen der aktuellen Position des Flugzeugs (A) auf eine waagrechte Ebene und einer Bodenkontaktposition entspricht, wenn das Flugzeug (A) entsprechend einem Standardanflug sinkt und die Geschwindigkeit verringert, um die Bedingungen eines stabilisierten Anflugs zu erreichen; und
- die Anzeigeeinrichtungen (7) ausgebildet sind, um dem Piloten des Flugzeugs (A) auf dem Navigationsbildschirm (9) gleichzeitig anzuzeigen:
● diese minimale Anflugentfernung in Form eines ersten Kreisbogens (C1), der auf eine Position (10) bezüglich des Flugzeugs zentriert ist und der die Bodenkontaktposition bezüglich eines optimierten Anflugs veranschaulicht; und
● diese zweite Anflugentfernung in Form eines zweiten Kreisbogens (C2), der auf die Position (10) bezüglich des Flugzeugs zentriert ist und der die Bodenkontaktposition bezüglich eines Standardanflugs veranschaulicht.

12. Vorrichtung nach Anspruch 11, **dadurch gekennzeichnet, dass** die zweiten Einrichtungen (5) ein neuronales Netz aufweisen.

13. Vorrichtung nach einem der Ansprüche 11 und 12, **dadurch gekennzeichnet, dass** sie außerdem Warneinrichtungen (18) aufweist, die ein Warnsignal im Cockpit des Flugzeugs (A) ausgeben können, wenn der erste Kreisbogen (C1) sich jenseits der Schwelle (12) einer für die Landung vorgesehenen Landebahn (2) befindet.

14. Flugzeug, **dadurch gekennzeichnet, dass** es eine Vorrichtung (1) aufweist, die das in einem der Ansprüche 1 bis 10 angegebene Verfahren anwenden kann.

15. Flugzeug, **dadurch gekennzeichnet, dass** es eine Vorrichtung (1) wie die in einem der Ansprüche 11 bis 13 angegebene aufweist.
